# EUROPEAN PATENT APPLICATION

(11) **EP 4 756 562 A1**
(43) Date of publication of application: **10.06.2026**
(21) Application number: 24863270.5
(22) Date of filing: 06.09.2024
(51) Int. Cl.: G06F 1/16

(54) **SENSOR ASSEMBLY AND ELECTRONIC DEVICE COMPRISING SAME**

(30) Priority: 07.09.2023 KR 20230119168; 31.10.2023 KR 20230148333
(71) Applicant: Samsung Electronics Co., Ltd., Suwon-si, Gyeonggi-do 16677 (KR)
(72) Inventor: YOON, Heewoong, Suwon-si Gyeonggi-do 16677 (KR); KIM, Jongah, Suwon-si Gyeonggi-do 16677 (KR); LEE, Kihyuk, Suwon-si Gyeonggi-do 16677 (KR); LEE, Donghan, Suwon-si Gyeonggi-do 16677 (KR); CHOI, Gwangho, Suwon-si Gyeonggi-do 16677 (KR); HWANG, Minkyung, Suwon-si Gyeonggi-do 16677 (KR)
(74) Representative: Gulde & Partner
(86) International application number: PCT/KR2024/013537
(87) International publication number: WO 2025/053691

(57) **Abstract**

According to one embodiment of the present disclosure, an electronic device may be provided. The electronic device may comprise: a display including a display panel; a sensor assembly disposed to face a rear surface of the display panel; and at least one processor electrically connected to the display and the sensor assembly. The display panel may include multiple scan lines including multiple pixels continuously arranged in a first direction. The scan lines may be spaced apart from each other in a second direction intersecting with the first direction. The sensor assembly may comprise: a first array including multiple first optical elements continuously arranged in the first direction; and a second array spaced apart from the first array in the second direction. The second array may include multiple second optical elements continuously arranged in the first direction. When the display is viewed from above, the first array and the second array may not overlap the scan lines or may overlap a predetermined number of the scan lines or fewer.

## Description

### [Technical Field]

Examples disclosed herein relate to a sensor assembly and an electronic device including the same.

### [Background Art]

Due to advancement in information and communication technology and semiconductor technology, various functions are being integrated into a single portable electronic device. For example, an electronic device may implement not only communication functions, but also entertainment functions such as gaming, multimedia functions such as music/video playback, communication and security functions for mobile banking, or schedule management and electronic wallet functions. These electronic devices are being miniaturized to be conveniently carried by users. An electronic device (e.g., a mobile phone) may include a display and a sensor assembly. The sensor assembly may detect an external environment (e.g., a position of an object or illumination) using optical elements. The sensor assembly may be disposed in an inactive area (e.g., a black matrix area) around the display or under the display (e.g., an under panel).

The above-described information may be provided as related art for the purpose of helping understand the disclosure. No claim or determination is made as to whether any of the foregoing may be applied as prior art with respect to the disclosure.

### [Detailed Description of the Invention]

### [Technical Solution]

According to an embodiment of the disclosure, an electronic device may be provided. The electronic device may include a display including a display panel, a sensor assembly disposed to face a rear surface of the display panel, and at least one processor electrically connected to the display and the sensor assembly. The display panel may include a plurality of scan lines including a plurality of pixels continuously arranged in a first direction. The scan lines may be spaced apart from each other in a second direction intersecting the first direction. The sensor assembly may include a first array including a plurality of first optical elements continuously arranged in the first direction, and a second array spaced apart from the first array in the second direction. The second array may include a plurality of second optical elements continuously arranged in the first direction. When the display is viewed from above, the first array and the second array may not overlap with the scan lines or may overlap with a specified number or fewer of the scan lines.

According to an embodiment, the display may further include a support structure disposed on the rear surface of the display panel to be spaced apart from the sensor assembly, and the support structure may include a first through hole at least partially facing the sensor assembly.

According to an embodiment, lengths of the first array and the second array in the first direction may each be a first specified length, and the first specified length may be greater than a diameter of the first through hole.

According to an embodiment, the specified number may be two or fewer.

According to an embodiment, the sensor assembly may be configured to measure illumination of an external environment of the electronic device using at least a portion of the first array or the second array.

According to an embodiment, the sensor assembly may be configured to be switchable into an independent mode in which the first array and the second array are driven independently or a composite mode in which the first array and the second array are driven in conjunction with each other.

According to an embodiment, the processor may be configured, in the independent mode, to change brightness of the display based on the greater of a first illuminance value measured by the first array or a second illuminance value measured by the second array.

According to an embodiment, the processor may be configured, in the composite mode, to change the brightness of the display based on a third illuminance value calculated using a first illuminance value measured by the first array or a second illuminance value measured by the second array.

According to an embodiment, in the composite mode, the first array and the second array may be driven with a time difference.

According to an embodiment, an integration time of the first array and the second array in the composite mode may be at least twice an integration time of the first array and the second array in the independent mode.

According to an embodiment, the sensor assembly may further include a third array disposed between the first array and the second array, the third array including a plurality of third optical elements continuously arranged in the first direction.

According to an embodiment, the sensor assembly may be configured to perform at least one of measuring illumination of an external environment of the electronic device or detecting a position of an external object of the electronic device using the third array.

According to an embodiment, the third array may be aligned with the first through-hole in a third direction intersecting the first direction and the second direction.

According to an embodiment, the first optical elements may include first light-receiving elements, and the second optical elements may include second light-receiving elements responsive to light having a wavelength band different from that to which the first light-receiving elements are responsive. According to an embodiment of the disclosure, a sensor assembly may be provided. The sensor assembly may include a first array including a plurality of first optical elements continuously arranged in the first direction, and a second array spaced apart from the first array in the second direction, the second array including a plurality of second optical elements 372a continuously arranged in the first direction. At least some of the first optical elements or the second optical elements may be configured to detect light incident on the sensor assembly.

According to an embodiment, at least some of the first optical elements or the second optical elements may be used to measure illumination of an external environment of the sensor assembly.

According to an embodiment, at least some of the first optical elements or the second optical elements may be used to detect a position of an external object of the sensor assembly.

According to an embodiment, the sensor assembly may be configured to be switchable into an independent mode in which the first array and the second array are driven independently or a composite mode in which the first array and the second array are driven in conjunction with each other.

According to an embodiment, the first optical elements may include first light-receiving elements, and the second optical elements may include second light-receiving elements responsive to light having a wavelength band different from that to which the first light-receiving elements are responsive.

According to an embodiment, the sensor assembly may further include a third array disposed between the first array and the second array, and the third array may include a plurality of third optical elements continuously arranged in the first direction.

According to an embodiment, the third optical elements may include light-receiving elements configured to detect illumination of an external environment of the sensor assembly or detect a position of an external object of the sensor assembly.

### [Brief Description of Drawings]

The above-described aspects or other aspects, configurations, and/or advantages regarding an embodiment of the disclosure may become more apparent through the following detailed description made with reference to the accompanying drawings.
FIG. 1 is a block diagram of an electronic device according to an embodiment of the disclosure in a network environment.
FIG. 2 is a front perspective view of an electronic device according to an embodiment disclosed herein.
FIG. 3 is a rear perspective view of the electronic device according to an embodiment disclosed herein.
FIG. 4 is a front exploded perspective view of an electronic device according to an embodiment of the disclosure.
FIG. 5 is a rear exploded perspective view of the electronic device according to an embodiment of the disclosure.
FIG. 6A is a plan view illustrating a display and a sensor assembly of an electronic device according to an embodiment of the disclosure.
FIG. 6B is a cross-sectional view taken along line A-A' of FIG. 6A.
FIG. 6C is a cross-sectional view taken along line B-B' of FIG. 6A.
FIGS. 7A and 7B are views illustrating driving of a display panel according to an embodiment of the disclosure.
FIG. 8A is a view illustrating driving of a sensor assembly according to an embodiment of the disclosure.
FIG. 8B is a view illustrating light-receiving elements of a sensor assembly according to an embodiment of the disclosure.
FIG. 9 is a view illustrating driving of a sensor assembly in a short mode according to an embodiment of the disclosure.
FIG. 10 is a view illustrating brightness control of a display using a sensor assembly according to an embodiment of the disclosure.
FIG. 11 is a view illustrating a display and a sensor assembly according to an embodiment of the disclosure.
FIG. 12 is a view illustrating driving of the sensor assembly in an independent mode according to an embodiment of the disclosure.
FIG. 13 is a view illustrating a field of view of the sensor assembly according to an embodiment of the disclosure.
FIGS. 14A and 14B are views illustrating driving of the sensor assembly in a composite mode according to an embodiment of the disclosure.
FIG. 15 is a view illustrating a change in a field of view of the sensor assembly according to tilting of an electronic device according to an embodiment of the disclosure.
FIG. 16 is a flowchart illustrating a method of adjusting brightness of a display using the sensor assembly according to an embodiment of the disclosure.

Throughout the appended drawings, like reference numerals may be assigned to like components, configurations, and/or structures.

### [Mode for Carrying out the Invention]

The following description provided with reference to the accompanying drawings is provided to aid in a comprehensive understanding of various embodiments of the disclosure defined by the claims and their equivalents. The following description includes various specific details for the purpose of better understanding, but these should be regarded merely as examples. Accordingly, a person ordinarily skilled in the art will recognize that various modifications and alterations to the various embodiments described herein may be made without departing from the scope and spirit of the disclosure. In addition, descriptions of known functions and configurations may be omitted for clarity and conciseness.

The terms and words used in the following description and claims are not to be interpreted as being limited to bibliographic meanings, but are intended to be used by the inventors to clearly and consistently describe the disclosure. Accordingly, it will be apparent to those skilled in the art that the following description of various embodiments of the disclosure is provided for illustrative purposes only and is not intended to limit the disclosure as defined by the appended claims and their equivalents.

The singular forms "a," "an," and "the" shall be understood to include plural referents unless the context clearly indicates otherwise. Thus, for example, a reference to "a component surface" is intended to include a reference to one or more of such surfaces.

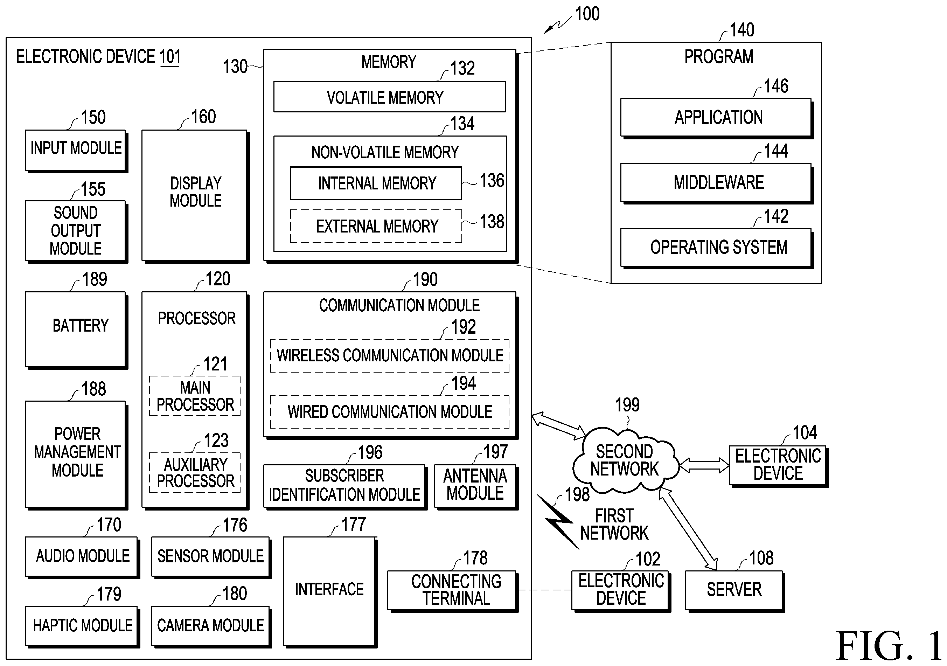

FIG. 1 is a block diagram illustrating an electronic device 101 in a network environment 100 according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, a length direction, a width direction, and/or a thickness direction of an electronic device may be mentioned. The length direction may be defined as the "Y-axis direction," the width direction may be defined as the "X-axis direction," and/or the thickness direction may be defined as the "Z-axis direction." In an embodiment, the direction in which a component is oriented may be mentioned along with the orthogonal coordinate system illustrated in the drawings, as well as the "negative/positive symbol (-/+)." For example, the front surface of an electronic device or a housing may be defined as a "surface oriented in the +Z direction," and the rear surface may be defined as a "surface oriented in the -Z direction." In an embodiment, a side surface of the electronic device or the housing may include an area oriented in the +X direction, an area oriented in the +Y direction, an area oriented in the -X direction, and/or an area oriented in the -Y direction. In another embodiment, the "X-axis direction" may include both the "-X direction" and the "+X direction." It is noted that these are based on the orthogonal coordinate system illustrated in the drawings for the sake of brevity of description, and the description of these directions or components does not limit an embodiment disclosed herein. For example, depending on whether the electronic device is in an unfolded or folded state, the direction in which the aforementioned front or rear surface may vary, and the aforementioned directions may be interpreted differently depending on a user's holding habits.

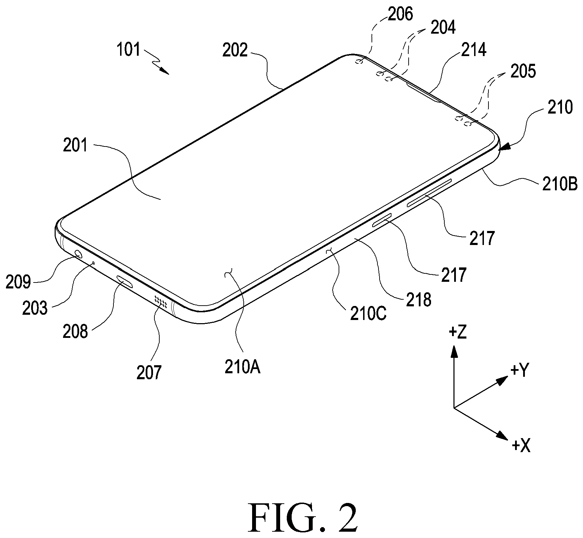

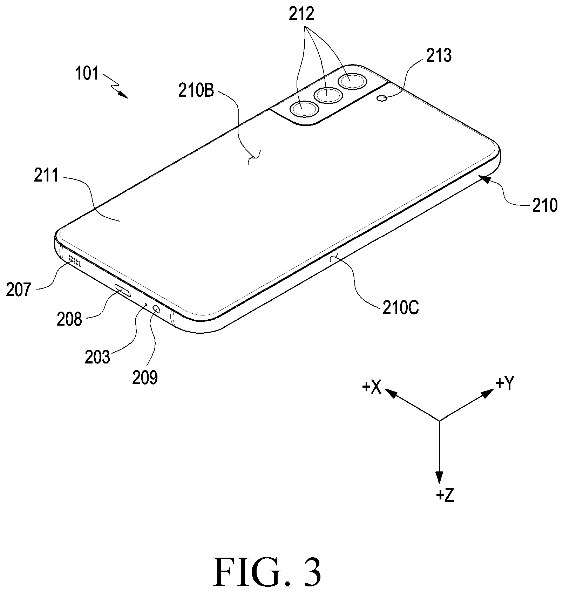

FIG. 2 is a front perspective view of an electronic device according to an embodiment of the disclosure. FIG. 3 is a perspective view illustrating the electronic device of FIG. 2 according to an embodiment of the disclosure, viewed from the rear side. The configuration of the electronic device 101 of FIGS. 2 and 3 may be wholly or partially the same as that of the electronic device 101 of FIG. 1.

Referring to FIGS. 2 and 3, according to an embodiment, the electronic device 101 may include a housing 210 including a first surface (or a front surface) 210A, a second surface (or a rear surface) 210B, and a side surface 210C surrounding the space between the first surface 210A and the second surface 210B. In an embodiment (not illustrated), the housing 210 may refer to a structure that forms a portion of the first surface 210A of FIG. 2, and the second surface 210B and the side surface 210C of FIG. 3. According to an embodiment, at least a portion of the first surface 210A may be made of a substantially transparent front surface plate 202 (e.g., a glass plate or a polymer plate including various coating layers). The second surface 210B may be made of a substantially opaque rear surface plate 211. The rear surface plate 211 may be made of, for example, coated or colored glass, ceramic, polymer, metal (e.g., aluminum, stainless steel (STS), or magnesium), or a combination of two or more of these materials. The side surface 210C may be defined by the side surface structure (or a "side surface bezel structure") 218 coupled to the front surface plate 202 and the rear surface plate 211 and including metal and/or polymer. In an embodiment, the rear surface plate 211 and the side surface structure 218 may be integrated with each other and may include the same material (e.g., a metal material such as aluminum).

Although not illustrated, the front surface plate 202 may include one or more areas that are curved and extend seamlessly from at least a portion of an edge toward the rear surface plate 211. In an embodiment, the front surface plate 202 (or the rear surface plate 211) may include only one of the areas bent and extending toward the rear surface plate 211 (or the front surface plate 202), at one side edge of the first surface 210A. According to an embodiment, the front surface plate 202 or the rear surface plate 211 may have a substantially flat plate shape, and in this case, may not include a bent and extending area. When the bent and extending area is included, the thickness of the electronic device 101 in the portion including the bent and extending area may be smaller than the thicknesses of other portions.

According to an embodiment, the electronic device 101 may include at least one of a display 201, an audio module (not illustrated) including one or more sound holes 203, 207, and 214 (e.g., the audio module 170 in FIG. 1), a sensor module 204 (e.g., the sensor module 176 in FIG. 1), camera modules 205, 212, and 213 (e.g., the camera module 180 in FIG. 1), key input devices 217 (e.g., the input module 150 in FIG. 1), and connector holes 208 and 209 (e.g., the connection terminal 178 in FIG. 1). In an embodiment, at least one of the components (e.g., the key input devices 217 or the light-emitting element 206) may be omitted from the electronic device 101 or other components may be additionally included.

According to an embodiment, the display 201 may be visually exposed through a substantial portion of, for example, the front plate 202. In an embodiment, at least a portion of the display 201 may be visually exposed through the front surface plate 202 forming the first surface 210A or through a portion of the side surface 210C. In an embodiment, the edge of the display 201 may be formed to be substantially the same as the shape of the periphery of the front surface plate 202 adjacent thereto. In an embodiment (not illustrated), the distance between the periphery of the display 201 and the periphery of the front surface plate 202 may be substantially constant in order to enlarge the visually exposed area of the display 201.

In an embodiment (not illustrated), recesses or openings may be provided in a portion of the screen display area of the display 201, and one or more of a sound hole 214, the sensor modules 204, the camera modules 205, and the light-emitting elements 206, which are aligned with the recesses or the openings, may be included. In an embodiment (not illustrated), the rear surface of the screen display area of the display 201 may include at least one of the sound hole 214, the sensor modules 204, the camera modules 205, a fingerprint sensor (not illustrated), and the light-emitting elements 206. In an embodiment (not illustrated), the display 201 may be coupled to or disposed adjacent to a touch-sensitive circuit, a pressure sensor capable of measuring a touch intensity (pressure), and/or a digitizer configured to detect an electromagnetic field-type stylus pen. In an embodiment, at least some of the sensor modules 204 and/or at least some of the key input devices 217 may be disposed on the side surface 210C.

According to an embodiment, an audio module (not illustrated) may include a microphone hole 203 and sound holes 207 and 214. A microphone configured to acquire external sound may be placed inside the microphone hole 203, and in an embodiment, a plurality of microphones may be placed to detect the direction of sound. According to an embodiment, the sound holes 207 and 214 may include an external sound hole 207 and a communication receiver hole 214. In an embodiment, the sound holes 207 and 214 and the microphone hole 203 may be implemented as one hole, or a speaker may be included in the audio module without the sound holes 207 and 214 (e.g., a piezo speaker).

According to an embodiment, the sensor modules 204 may generate electrical signals or data valuescorresponding to an internal operating state or an external environmental state of the electronic device 101. The sensor modules 204 may include, for example, a first sensor module 204 (e.g., a proximity sensor) and/or a second sensor module (not illustrated) (e.g., a fingerprint sensor) disposed on the first surface 210A of the housing 210. According to an embodiment, an additional sensor module may be disposed on the second surface 210B of the housing 210. The fingerprint sensor (not illustrated) may be disposed not only on the first surface 210A (e.g., the display 201) of the housing 210, but also on the second surface 210B or the side surface 210C of the housing 210. The electronic device 101 may further include at least one of, for example, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the camera modules 205, 212, and 213 may include a first camera module 205 facing the first surface 210A of the electronic device 101 and a second camera module 212 facing the second surface 210B and/or a flash 213. For example, the first camera module 205 and/or the second camera module 212 may include one or more lenses, an image sensor, and/or an image signal processor. According to an embodiment, some camera modules 205 among the camera modules 205 and 212 and/or some sensor modules (e.g., the sensor modules 204) may be disposed to be exposed to the outside through at least a portion of the display 201. According to an embodiment, the first camera modules 205 may include a punch hole camera disposed inside a hole or recess provided in the rear surface of the display 201. For example, the first camera module 205 may receive at least a portion of the light incident on the first surface (or front surface) 210A of the electronic device 101 through the display 201 inside the electronic device 101.

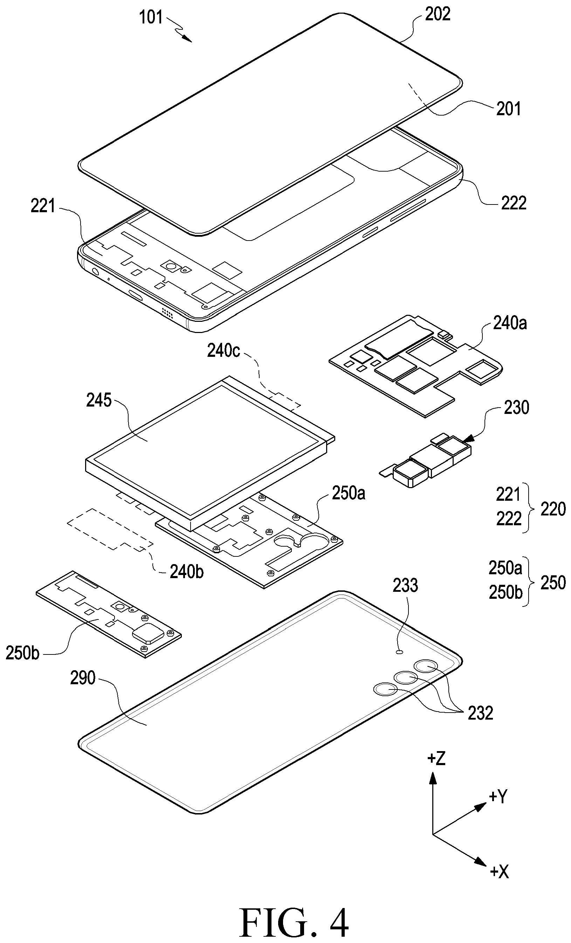

According to an embodiment, the second camera modules 212 may be disposed inside the housing 210 such that a lens is exposed to the second surface (or the rear surface) 210B of the electronic device 101. For example, the camera modules 212 may be electrically connected to a printed circuit board (e.g., the printed circuit board 240a in FIG. 4). For example, the flash 213 may include a light-emitting diode or xenon lamp. In an embodiment, one or more lenses (e.g., an infrared camera lens, a wide-angle lens, and a telephoto lens) and image sensors may be disposed on one surface of the electronic device 101. In an embodiment, the flash 213 may emit infrared rays. For example, the infrared rays emitted from the flash 213 and reflected by an object may be received through a sensor module (not illustrated) disposed on the second surface 210B of the housing 210. The electronic device 101 or a processor (e.g., the processor 120 in FIG. 1) may detect depth information of the object based on the point in time when the infrared rays are received from the sensor module.

According to an embodiment, the key input device 217 may be disposed on the side surface 210C of the housing 210. In an embodiment, the electronic device 101 may not include some or all of the above-described key input devices 217, and a key input device 217 not included may be implemented in another form, such as a soft key, on the display 201. In an embodiment, the key input devices may include a sensor module disposed on the second surface 210B of the housing 210.

According to an embodiment, the light-emitting element 206 may be disposed on, for example, the first surface 210A of the housing 210. The light-emitting elements 206 may provide, for example, the state information of the electronic device 101 in an optical form. In an embodiment, the light-emitting elements 206 may provide, for example, a light source that operates in conjunction with the operation of the camera module 205. The light-emitting elements 206 may include, for example, an LED, an IR LED, and a xenon lamp.

According to an embodiment, the connector holes 208 and 209 may include a first connector hole 208 capable of accommodating a connector (e.g., a USB connector) configured to transmit/receive power and/or data to/from an external electronic device, and a second connector hole (e.g., an earphone jack) 209 capable of accommodating a connector configured to transmit/receive an audio signal to/from an external electronic device.

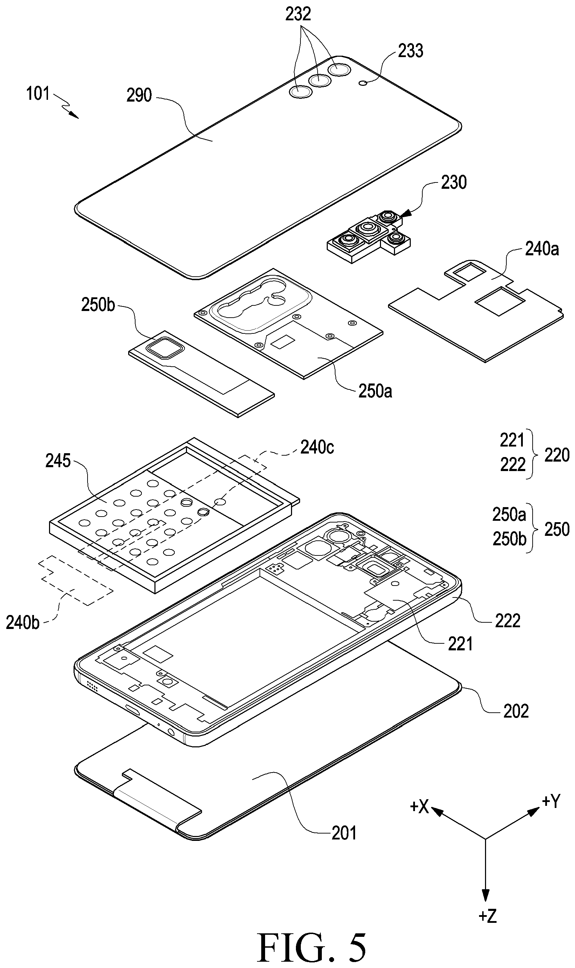

FIG. 4 is a front exploded perspective view of an electronic device according to an embodiment of the disclosure. FIG. 5 is a rear exploded perspective view of the electronic device according to an embodiment of the disclosure.

Referring to FIGS. 4 and 5, the electronic device 101 (e.g., the electronic device 101 in FIG. 1 and/or the electronic device 101 in FIG. 2 or 3) may include a display 201 (e.g., the display 201 in FIG. 2), a front surface plate 202 (e.g., the front surface plate 202 in FIG. 2), a support structure 221 (e.g., a bracket), a side surface bezel structure 222, a camera module 230 (e.g., the camera module 180 in FIG. 1), one or more printed circuit boards (or PCB assemblies) 240a and 240b, a battery 245 (e.g., the battery 189 in FIG. 1), a rear case 250, an antenna (not illustrated) (e.g., the antenna module 197 in FIG. 1), and/or a rear surface plate 290 (e.g., the rear surface plate 211 in FIG. 3). According to an embodiment, when the electronic device 101 includes multiple printed circuit boards 240a and 240b, the electronic device 101 may include at least one flexible printed circuit board 240c to electrically connect different printed circuit boards. For example, the printed circuit boards 240a and 240b may include a first circuit board 240a positioned above the battery 245 (e.g., in the +Y-axis direction) and a second circuit board 240b positioned below the battery 245 (e.g., in the -Y-axis direction), and the flexible printed circuit board 240c may electrically connect the first circuit board 240a and the second circuit board 240b.

According to an embodiment, the electronic device 101 may omit at least one of the components (e.g., a support structure 221, a rear case 250, or a flexible printed circuit board 240c) or may additionally include another component. At least one of the components of the electronic device 101 may be the same as or similar to at least one of the components of the electronic device 101 illustrated in FIG. 2 or FIG. 3, and redundant descriptions are omitted below.

In an embodiment, the support structure 221 may be provided in at least a partially planar form. In another embodiment, the support structure 221 may be disposed inside the electronic device 101 and may be either connected to or integrated with the side surface bezel structure 222. For example, the support structure 221 may be made of a conductive material and/or a non-conductive material (e.g., polymer). When the support structure 221 includes a conductive material such as metal, a portion of the side surface bezel structure 222 or the support structure 221 may function as an antenna. The support structure 221 may have two surfaces facing away from each other. The display 201 may be disposed on one of the two surfaces of the support structure 221, while the printed circuit boards 240a and 240b may be disposed on the other surface.

According to an embodiment, the support member 221 and the side surface bezel structure 222 may be combined and referred to as a front case or a housing 220. According to an embodiment, the housing 220 may be generally understood as a structure to accommodate, protect, or place electrical/electronic components such as printed circuit boards 240a and 240b or a battery 245. In an embodiment, it may be understood that the housing 220 includes structures capable of being visually or tactually recognized by a user in the exterior of the electronic device 101, such as the side surface bezel structure 222, the front surface plate 202, and/or the rear surface plate 290. In an embodiment, the "front surface or rear surface of the housing 220" may refer to the first surface 210A in FIG. 2 or the second surface 210B in FIG. 3. In an embodiment, the support member 221 may be disposed between the front surface plate 202 (e.g., the first surface 210A in FIG. 1) and the rear surface plate 290 (e.g., the second surface 210B in FIG. 3) and may serve as a structure on which electrical/electronic components, such as the printed circuit boards 240a and 240b or the camera module 230, are disposed. In the following detailed description, the camera module 230 of the electronic device 101 may generally be illustrated as including a configuration that receives light that enters through the second surface 210B of the electronic device 101. However, the electronic device 101 may further include a camera module (e.g., the camera module 205 in FIG. 2) and/or a sensor module (e.g., the sensor module 204 in FIG. 2) disposed to be exposed outside through at least a portion of the display 201.

According to an embodiment, the camera module 230 may include at least one camera module, for example, at least one of the multiple camera modules illustrated in FIGS. 4 and 5. In an embodiment, the camera module 230 may be disposed on a portion of the support structure 221 at a position near the printed circuit boards 240a and 240b. In another embodiment, the camera module 230 may be at least partially enclosed by the rear case 250 (e.g., the upper rear case 250a). According to an embodiment, the camera module 230 may receive, inside the electronic device 101, at least some of the light entering through optical holes or cover windows 232 and 233 disposed on the rear surface (e.g., the second surface 210B in FIG. 3) of the electronic device 101. According to an embodiment, the camera module 230 may generally be aligned with any of the cover windows 232 and 233.

According to an embodiment, the printed circuit boards 240a and 240b may include circuit devices implemented in the form of integrated circuit chips (e.g., a processor), a communication module (e.g., communication module 190 in FIG. 1), a power management module (e.g., the power management module 188), memory (e.g., the memory 130 in FIG. 1), an interface (e.g., the interface 177 in FIG. 1), or various electrical/electronic components. The processor (e.g., the processor 120 in FIG. 1) may include one or more of a central processing unit (CPU), an application processor, a graphics processing unit (GPU), an image signal processor, a sensor hub processor, or a communication processor. The memory may include, for example, volatile memory or non-volatile memory. The interface may include, for example, a high-definition multimedia interface (HDMI), a universal serial bus (USB) interface, an SD card interface, and/or an audio interface. The interface may electrically or physically connect, for example, the electronic device 101 to an external electronic device, and may include a USB connector, an SD card/MMC connector, or an audio connector. According to an embodiment, the printed circuit boards 240a and 240b may be provided with electromagnetic shielding from the rear case 250.

According to an embodiment, the battery 245 may serve as a device that supplies power to at least one component of the electronic device 101, and may include, for example, a non-rechargeable primary cell, a rechargeable secondary cell, or a fuel cell. At least a portion of the battery 245 may be disposed on substantially the same plane as, for example, the printed circuit boards 240a and 240b. The battery 245 may be integrally disposed inside the electronic device 101 or may be detachably disposed on the electronic device 101.

According to an embodiment, the rear case 250 may include an upper rear case 250a and a lower rear case 250b. In an embodiment, the upper rear case 250a may be disposed to enclose the printed circuit boards 240a and 240b (e.g., the first circuit board 240a) together with a portion of the support structure 221. For example, the upper rear case 250a may be disposed to face the support structure 221 with the first circuit board 240a interposed therebetween.

According to an embodiment, the lower rear case 250b may serve as a structure configured to dispose various electric/electronic components, including an interface (e.g., a USB connector, an SD card/MMC connector, or an audio connector). According to an embodiment, electrical/electronic components, such as an interface (e.g., a USB connector, an SD card/MMC connector, or an audio connector), may be disposed on an additional printed circuit board (not illustrated). In this case, the lower rear case 250b may be disposed to enclose the additional printed circuit board (not illustrated) together with another portion of the support structure 221. For example, the interface disposed on the additional printed circuit board (not illustrated) or the lower rear case 250b may be disposed to correspond to the sound hole 207 or the connector holes 208 and 209 illustrated in FIG. 2.

According to an embodiment, an antenna (not illustrated) may include a conductor pattern implemented on the surface of the rear case 250, for example, through a laser direct structuring (LDS) process. In an embodiment, the antenna may include a printed circuit pattern provided on the surface of a thin film, and the thin film-type antenna may be disposed between the rear surface plate 290 and the battery 245. The antenna may include, for example, a near-field communication (NFC) antenna, a wireless charging antenna, and/or a magnetic secure transmission (MST) antenna. The antenna may, for example, perform near-field communication with an external device, or wirelessly transmit and receive power required for charging. In an embodiment, another antenna structure may be configured by a part of, or a combination of, the support structure 221 and/or the side surface bezel structure 222.

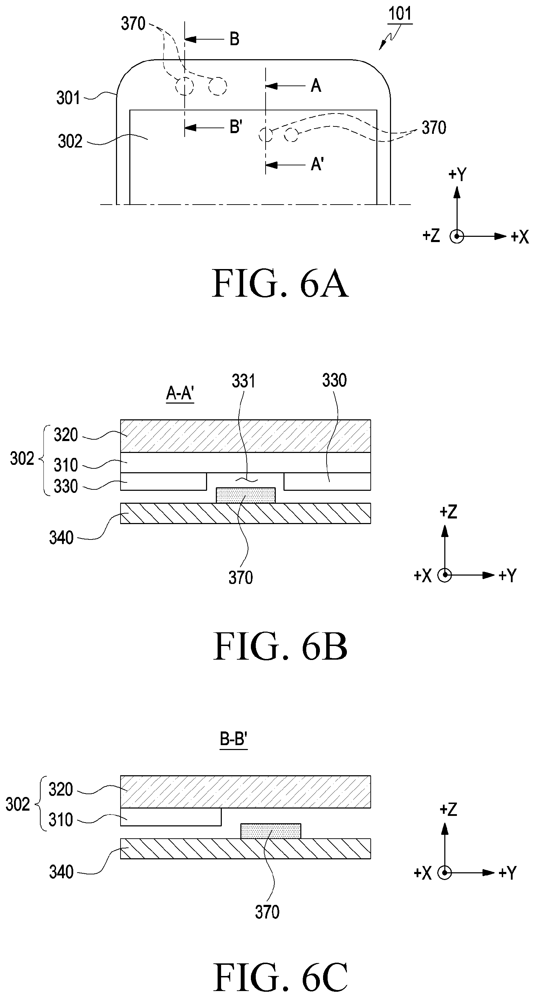

FIG. 6A is a plan view illustrating a display and a sensor assembly of an electronic device according to an embodiment of the disclosure. FIG. 6B is a cross-sectional view taken along line A-A' of FIG. 6A. FIG. 6C is a cross-sectional view taken along line B-B' of FIG. 6A. The configuration of the electronic device of FIG. 6A may be wholly or partially the same as the configuration of the electronic device of FIGS. 1 to 5.

Referring to FIGS. 6A to 6C, in an embodiment, the electronic device 101 may include a display 302, a sensor assembly 370 (e.g., the sensor module 176 of FIG. 1 and/or the sensor module 204 of FIG. 2), and/or a printed circuit board 340 on which the sensor assembly 370 is disposed. For example, the printed circuit board 340 may be a main circuit board on which a processor (e.g., the processor 120 of FIG. 1) is disposed (e.g., the first printed circuit board 240a of FIGS. 4 and 5), or may be an auxiliary circuit board connected to the main circuit board.

According to an embodiment, the display 302 may include a display panel 310 and a cover window 320 (e.g., the front surface plate 202 of FIG. 4) disposed on the front surface of the display panel 310 (e.g., a surface oriented in the +Z direction). According to an embodiment, the display 302 may include a support structure 330 disposed on the rear surface of the display panel 310 (e.g., a surface oriented in the -Z direction). According to an embodiment, the display 302 may include an active area (or display area) in which an image is displayed and an inactive area (e.g., a black matrix area) such as a bezel area around the active area.

According to an embodiment, the sensor assembly 370 may include an ambient light sensor (ALS), a proximity sensor, or a proximity-ambient light sensor in which an ambient light sensor and a proximity sensor are integrated. For example, the electronic device 101 may be configured to adjust brightness (or screen brightness) of the display 302 based on illumination (or ambient brightness of the electronic device 101) of an external environment of the electronic device 101 measured by the ambient light sensor of the sensor assembly 370. The electronic device 101 may be configured to optimize brightness of the display 302 according to ambient brightness of the electronic device 101 measured by the ambient light sensor of the sensor assembly 370, thereby preventing glare of a user and improving visibility of the screen. For example, the proximity sensor of the sensor assembly 370 may detect a position of an object located outside the electronic device 101 or a distance to the object. For example, the proximity sensor of the sensor assembly 370 may provide a function of turning off the screen of the display 302 during a call to improve power consumption or preventing inadvertent touch of the display 302 due to contact with a user's body (e.g., a face) during the call.

Referring to FIGS. 6A and 6B, in an embodiment, the sensor assembly 370 (e.g., a proximity sensor and/or an ambient light sensor) may be disposed under an active area of the display panel 310 (e.g., an under-panel structure). For example, the sensor assembly 370 may be formed in an in-display sensor structure and may be formed integrally with the display 302 inside the display 302. When the sensor assembly 370 is disposed under the display (e.g., an under-panel structure), the sensor assembly 370 may detect light incident through the display 302 to provide information about an external environment of the electronic device 101 (e.g., illumination or a position of an object). In the disclosure, the arrangement of the sensor assembly 370 may be changed. For example, referring to FIG. 6C, the sensor assembly 370 (e.g., a proximity sensor and/or an ambient light sensor) may be disposed under an inactive area (e.g., a black matrix area) of the display 302.

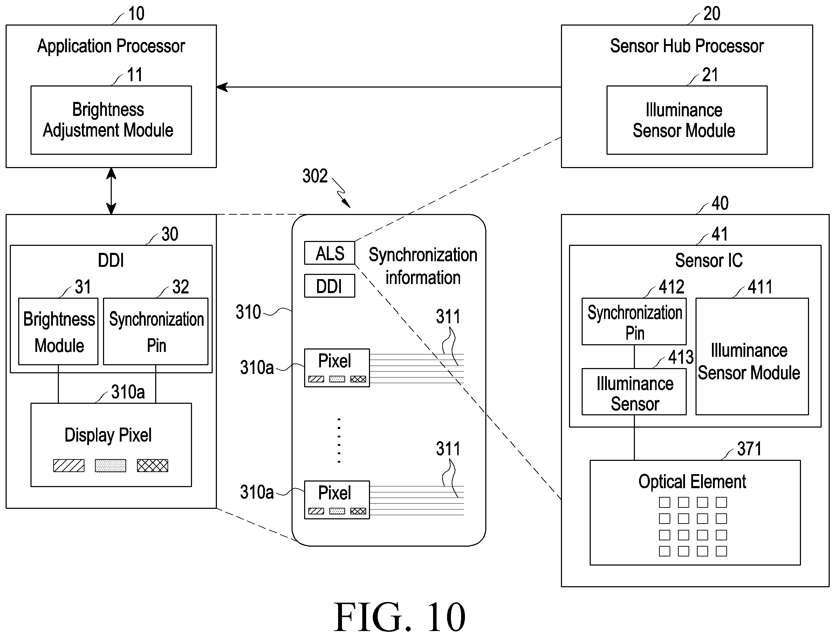

Referring to FIG. 6B, according to an embodiment, the display 302 may include a first through hole 331 (e.g., an exposure area, an opening, a punch hole, or a perforation hole) formed at a position facing the sensor assembly 370. For example, the first through hole 331 may be formed in a support structure 330 disposed on a rear surface (e.g., a surface oriented in the -Z direction) of the display 302 or the display panel 310. According to an embodiment, when the sensor assembly 370 is disposed in the active area of the display 302, the sensor assembly 370 may receive light incident from outside the electronic device 101 through the first through hole 331 of the display 302. The size or diameter of the through hole 331 may be determined in consideration of a size of the sensor assembly 370 or a field of view (FOV) of the sensor assembly 370. According to an embodiment, the sensor assembly 370 (e.g., a proximity sensor and/or an ambient light sensor) may include an array of optical elements (e.g., photodiodes) disposed to minimize optical interference caused by the display panel 310 and/or physical interference with the first through hole 331 (see FIG. 10) while overlapping the display panel 310.

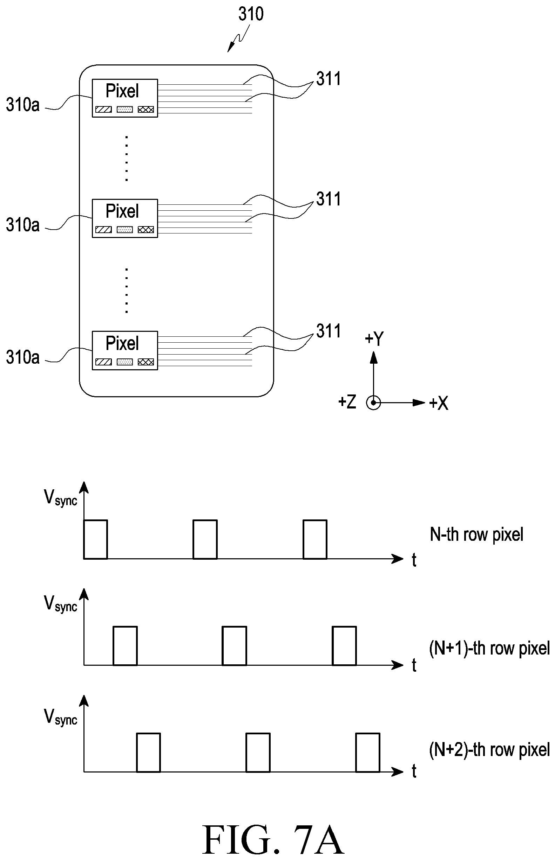

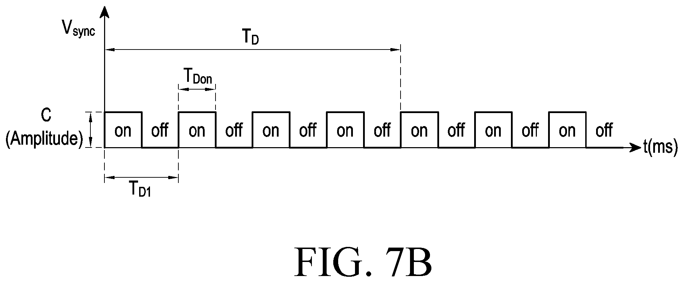

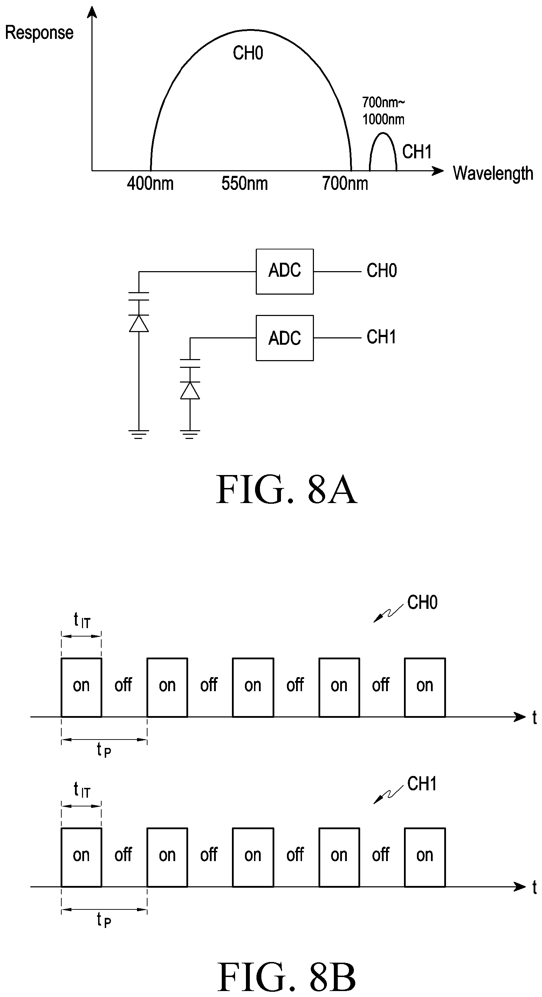

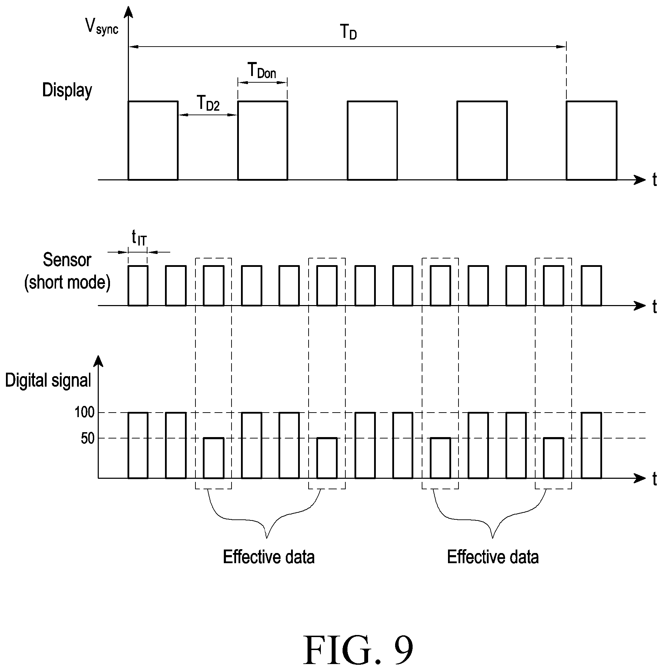

FIGS. 7A and 7B are views illustrating driving of a display panel according to an embodiment of the disclosure. FIG. 8A is a view illustrating driving of a sensor assembly according to an embodiment of the disclosure. FIG. 8B is a view illustrating light-receiving elements of a sensor assembly according to an embodiment of the disclosure. FIG. 9 is a view illustrating driving of a sensor assembly in a short mode according to an embodiment of the disclosure.

Referring to FIG. 7A, the display panel 310 (e.g., the display panel 310 of FIG. 6) of the display (e.g., the display 302 of FIG. 6) may include a plurality of pixel modules 310a. According to an embodiment, the display panel 310 may include scan lines or scanning lines 311 (or pixel lines or pixel arrays). The scan lines 311 may include the pixel modules 310a. The scan lines 311 may be linear structures extending in a first direction (e.g., a horizontal direction or the X-axis direction) and may include a plurality of pixels continuously arranged in the first direction. The scan lines 311 may be continuously arranged in a second direction (e.g., a vertical direction or the Y-axis direction) intersecting the first direction.

According to an embodiment, referring to FIG. 7A, pixels of each scan line 311 of the display panel 310 may be simultaneously activated (or turned on) or deactivated (or turned off) at a predetermined period (e.g., T_{D} in FIG. 7B). For example, an operation signal (e.g., V_{sync} of FIGS. 7A and 7B) may be generated once for each scan line 311 at a predetermined period (e.g., T_{D} in FIG. 7B). For example, referring to FIG. 7A, when an N-th scan line 311 is activated (or turned on) according to the operation signal (e.g., V_{sync} of FIGS. 7A and 7B), an (N+1)-th scan line 311 disposed next to the N-th scan line 311 (e.g., on a -Y-direction side) may be activated (or turned on) with a predetermined time difference. For example, an operating frequency of the display panel 310 may be variable in a range from about 30 Hz to about 120 Hz. The period (e.g., T_{D} of FIG. 7B) at which the pixels are activated (or turned on) and deactivated (or turned off) may be an inverse of the operating frequency of the display panel 310. For example, when the operating frequency of the display panel 310 is about 60 Hz, the operation signal (V_{sync}) may be generated once for each scan line 311 every predetermined period of about 16.6 ms. For example, referring to FIG. 7B, when the period (e.g., T_{D} of FIG. 7B) is about 16.6 ms, activation (or turning on) and deactivation (or turning off) may be repeated four times within one period, and a time for one activation (or turning on) and one deactivation (or turning off) (e.g., T_{D1} of FIG. 7B) may be about 4.15 ms. For example, brightness of the display 302 may increase as a time during which a pixel is activated (or turned on) (e.g., T_{Don} of FIG. 7B) becomes longer, and brightness may also increase as luminance (e.g., C of FIG. 7B) when the pixel is activated (or turned on) becomes greater.

In FIG. 8A, a horizontal axis of the graph may represent wavelength (nm), and a vertical axis may represent a responsivity level. In an embodiment, the sensor assembly (e.g., the sensor assembly 370 of FIG. 6) may include light-receiving elements, and the light-receiving elements may be photoelectric detectors such as photodiodes. Referring to FIG. 8A, the sensor assembly 370 may include light-receiving elements including channels (CHO and CH1 of FIG. 8A) that are sensitive to light having different wavelength bands. Referring to FIG. 8A, for example, the light-receiving elements of a first channel (CHO) may be sensitive to light having a wavelength band of about 400 nm to about 700 nm, and the light-receiving elements of a second channel (CH1) may be sensitive to light having a wavelength band of about 700 nm to about 1000 nm. According to an embodiment, the electronic device 101 may calculate an ambient brightness or an illuminance value of the electronic device 101 using an analog-to-digital converter (ADC) value of the first channel (CHO) and/or an ADC value of the second channel (CH1).

Referring to FIG. 8B, the light-receiving elements of the first channel (CHO) and the second channel (CH1) of the sensor assembly (e.g., the sensor assembly 370 of FIG. 6) may be activated (or turned on) and deactivated (or turned off) once during a specific period (e.g., T_{P} of FIG. 8B). For example, the light-receiving elements of the first channel (CHO) and the second channel (CH1) may be activated (or turned on) during an integration time (e.g., t_{IT} of FIG. 8B) within one specific period T_{P}. For example, the specific period T_{P} and the integration time t_{IT} may be determined by a manufacturer or a user. For example, as the size of the light-receiving elements of the sensor assembly 370 becomes larger and as the integration time t_{IT} of the light-receiving elements becomes longer, sensitivity of the sensor assembly 370 may be improved.

FIG. 9 is a view illustrating driving of a display panel (e.g., the display panel 310 of FIG. 6) and driving of a sensor assembly (e.g., the sensor assembly 370 of FIG. 6) together. According to an embodiment, the sensor assembly 370 may be disposed under the display (e.g., the display 302 of FIG. 6) (e.g., an under-panel structure). When the sensor assembly 370 receives optical noise caused by the display panel 310, accuracy of an illuminance value measured by the sensor assembly 370 may decrease. According to an embodiment, the sensor assembly 370 may be driven in a short mode to avoid optical noise of the display panel 310. In the short mode, a measurement value of the sensor assembly 370 when the display panel 310 is turned off may be used as valid data for measuring illumination of an environment surrounding the electronic device 101. For example, a measurement value of the sensor assembly 370 when the display panel 310 is turned off may be detected based on an ADC value (e.g., 50 or 100) of the sensor assembly 370 that changes when the display panel 310 is activated (or turned on) or deactivated (or turned off). For example, in the short mode, an integration time (e.g., t_{IT} of FIG. 8) of the sensor assembly 370 may be about 400 µs.

FIG. 10 is a view illustrating brightness control of a display using a sensor assembly according to an embodiment of the disclosure.

Referring to FIG. 10, in an embodiment, an electronic device (e.g., the electronic device 101 of FIGS. 1 to 5) may include an application processor 10, a sensor hub processor 20, a display driver interface (DDI) 30, and a sensor module (or a sensor integrated circuit (IC)) 40.

According to an embodiment, the application processor 10 may be configured to control or adjust properties (e.g., color and brightness) of a display 302 (e.g., the display 302 of FIG. 6). For example, the application processor 10 may include one or more processors (e.g., the processor 120 of FIG. 1). For example, the application processor 10 may include a main processor (e.g., the main processor 121 of FIG. 1) for high-performance processing and an auxiliary processor (e.g., the auxiliary processor 123 of FIG. 1) for low-power processing.

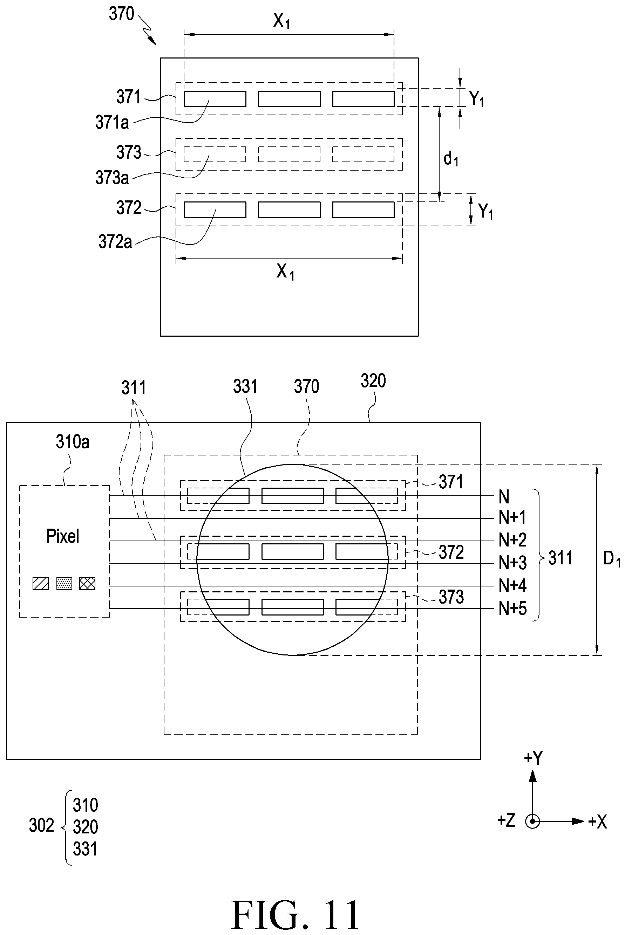

According to an embodiment, the application processor 10 may include a brightness adjustment module 11. For example, the brightness adjustment module 11 may determine brightness of the display 302 based on an illuminance value (or ambient brightness) of an external environment of the electronic device 101 measured by an illuminance sensor of a sensor assembly (e.g., the sensor assembly 370 of FIGS. 6A to 6C and FIG. 11). For example, the brightness adjustment module 11 may determine brightness of the display 302 using an algorithm and/or a pre-stored luminance table. For example, the application processor 10 or the brightness adjustment module 11 may increase the luminance of the display 302 in a high-illuminance environment (e.g., outdoors in strong sunlight) to secure visibility, and may decrease the luminance of the display 302 in a low-illuminance environment (e.g., a dark indoor space) to prevent glare.

According to an embodiment, the sensor hub processor 20 may be configured to control or adjust driving of a sensor module, such as an illuminance sensor, a near-illuminance sensor, and/or a proximity sensor of a sensor assembly (e.g., the sensor assembly 370 of FIGS. 6A to 6C and FIG. 11). For example, the application processor 10 may determine and adjust brightness of the display 302 based on an illuminance value (Lux value) calculated using an algorithm of the sensor hub processor 20. For example, the sensor hub processor 20 may include an illuminance sensor processor module 21. For example, the illuminance sensor processor module 21 may calculate an illuminance (or ambient brightness) value of a surrounding environment of the electronic device 101 using a pre-stored calculation expression, and may be configured to determine a gain of an illuminance sensor of the sensor assembly 370 based on the calculated illuminance value.

According to an embodiment, the display driver interface (DDI) 30 may be a semiconductor configured to control the display 302, and may control driving signals and data for displaying a video signal (or an image or a moving picture) on a screen of the display panel 310. For example, the DDI 30 may be electrically connected to the application processor 10, and may cause a video signal provided from the application processor 10 to be displayed on the display 302. For example, the DDI 30 may be electrically connected to the display panel 310, and may be configured as a component mechanically independent of the display 302. For example, the DDI 30 may include a brightness module 31 for controlling properties such as luminance of the display 302. For example, the DDI 30 may control a timing at which the display 302 is driven, and may include a synchronization pin (sync pin) 32 for synchronizing with a driving timing of an illuminance sensor.

According to an embodiment, pixel modules 310a of the display panel 310 (e.g., the pixel modules 310a of FIGS. 7A and 11) may include a plurality of scan lines 311. For example, the scan lines 311 of the display panel 310 may be driven line by line, and a screen of the display 302 or the display panel 310 may be refreshed.

According to an embodiment, the sensor module 40 may include an illuminance sensor module 41 and a synchronization pin (sync pin) 42. For example, the synchronization pin 42 may synchronize a driving timing of the illuminance sensor module 41 with the DDI 30. For example, the sensor module 40 may include an illuminance sensor application specific integrated circuit (ASIC) 43 electrically connected to the synchronization pin 42 and to optical elements 371a, 372a, and 373a of the sensor assembly (e.g., the sensor assembly 370 of FIG. 10). According to an embodiment, the illuminance sensor 41 may receive light from an external light source of the electronic device 101 and may measure an intensity of light or illumination. According to an embodiment, the illuminance sensor module 41 of the sensor module 40 may refer to a first array 371 (e.g., the first array 371 of FIG. 11), a second array 372 (e.g., the second array 372 of FIG. 11), and/or a third array 373 (e.g., the third array 373 of FIG. 11) of the sensor assembly (e.g., the sensor assembly 370 of FIGS. 6A to 6C and 11). The illuminance sensor may include a light-receiving element (e.g., a photodiode) capable of receiving light. In the disclosure, the illuminance sensor is mainly described as the sensor constituting the sensor module 40, but the type of the sensor is not limited. For example, the sensor module 40 may include various types of optical sensors, such as a proximity sensor or an ultraviolet sensor.

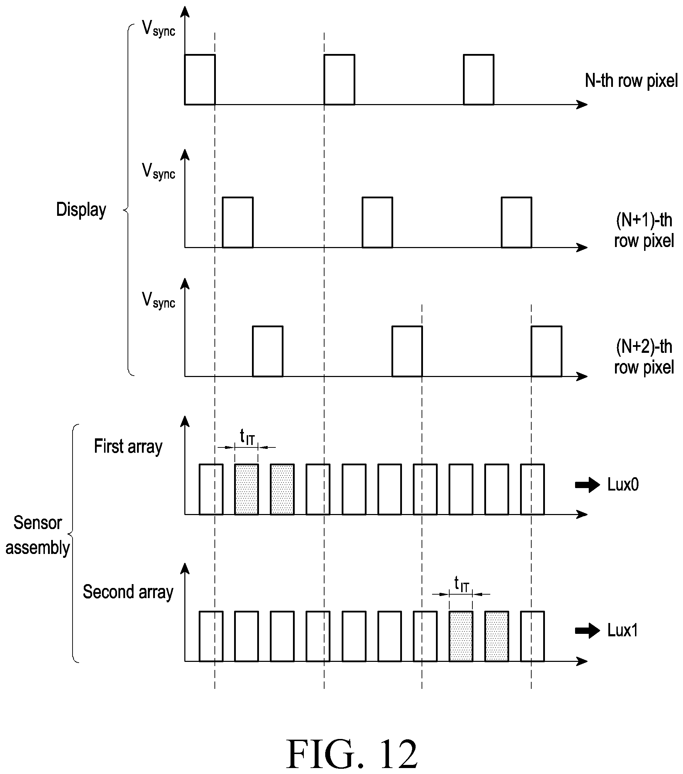

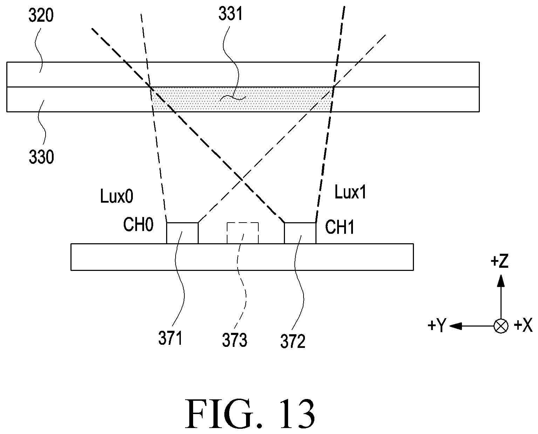

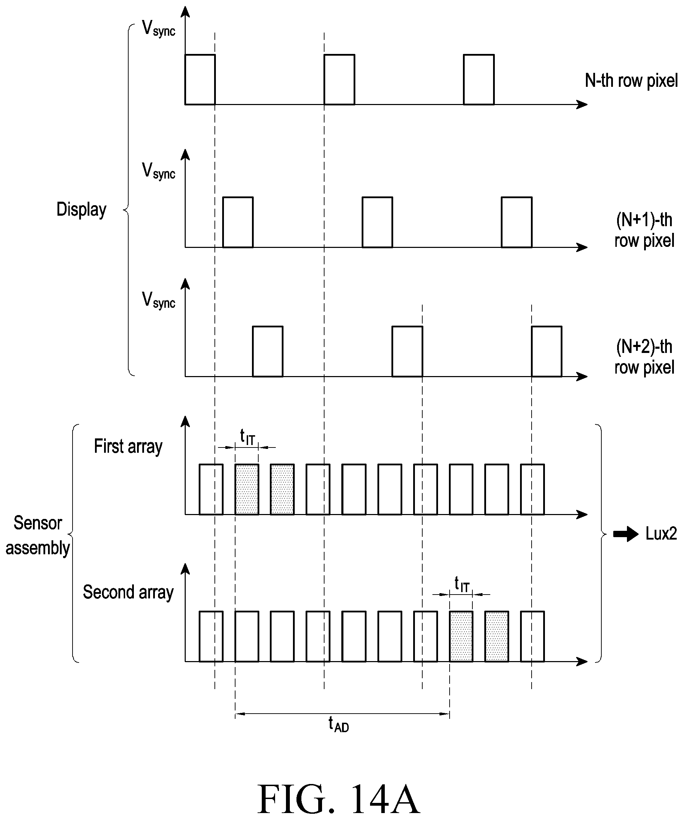

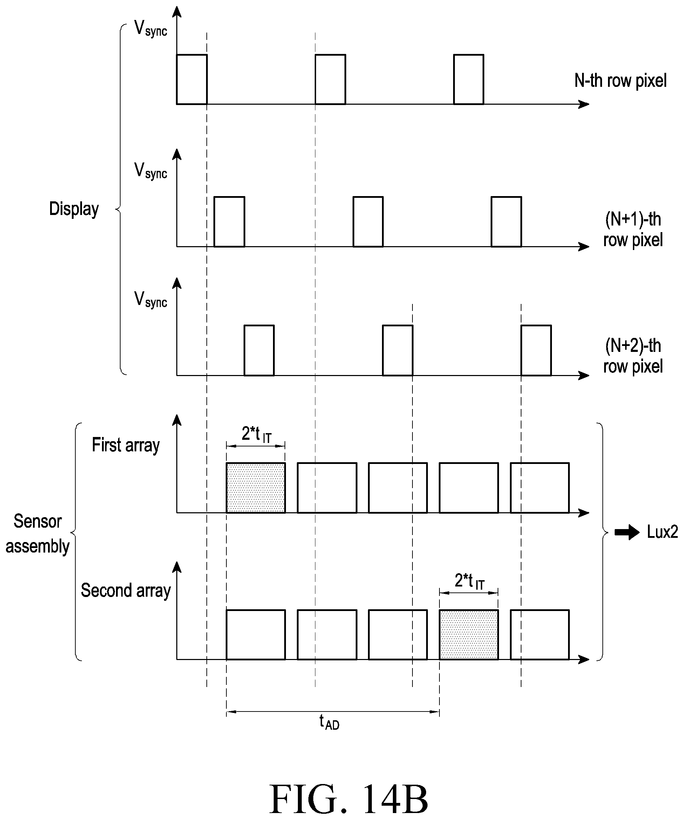

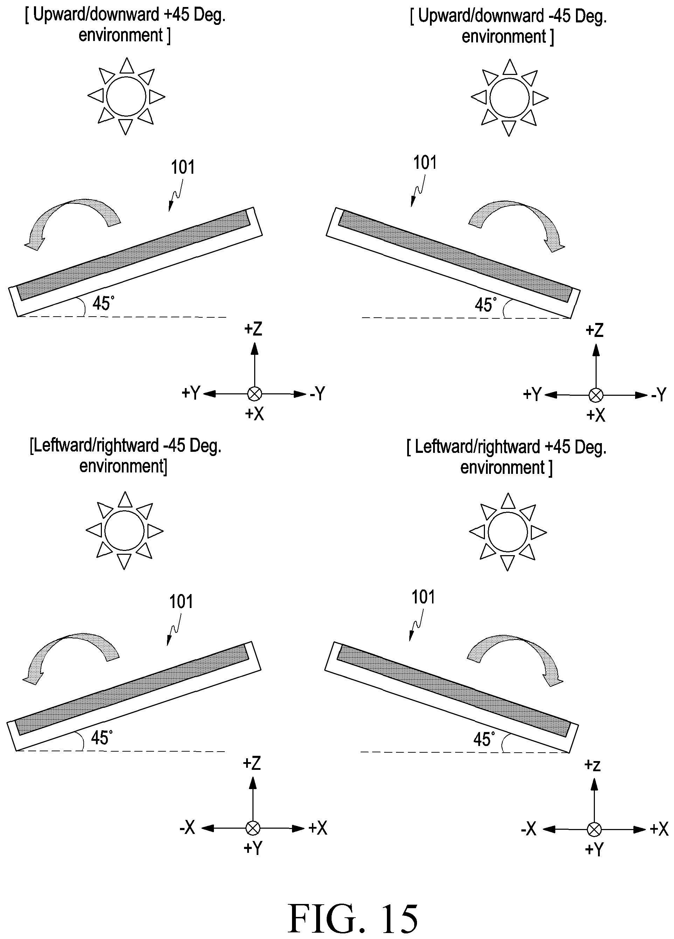

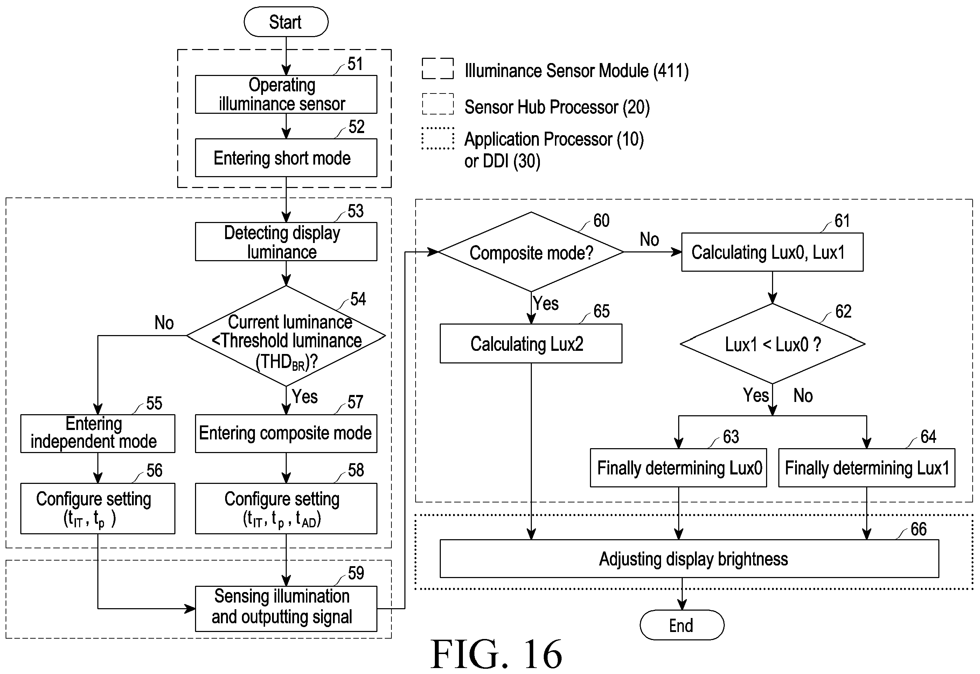

FIG. 11 is a view illustrating a display and a sensor assembly according to an embodiment of the disclosure. FIG. 12 is a view illustrating driving of the sensor assembly in an independent mode according to an embodiment of the disclosure. FIG. 13 is a view illustrating a field of view of the sensor assembly according to an embodiment of the disclosure. FIGS. 14A and 14B are views illustrating driving of the sensor assembly in a composite mode according to an embodiment of the disclosure. FIG. 15 is a view illustrating a change in a field of view of the sensor assembly according to tilting of an electronic device according to an embodiment of the disclosure. FIG. 16 is a flowchart illustrating a method of adjusting brightness of a display using the sensor assembly according to an embodiment of the disclosure.

FIG. 11 may illustrate an arrangement in which light-receiving elements 371a, 372a, and 373a of a sensor assembly 370 (e.g., the sensor assembly 370 of FIG. 6) are arranged, and an arrangement in which a display 302 (e.g., the display 302 of FIGS. 6A to 6C) overlaps the sensor assembly 370.

In an embodiment, the sensor assembly 370 may include arrays 371, 372, and 373 extending in a first direction (e.g., the X-axis direction). The arrays 371, 372, and 373 may include a plurality of optical elements 371a, 372a, and 373a continuously arranged in the first direction (e.g., the X-axis direction). According to an embodiment, the sensor assembly 370 may include a first array 371 and a second array 372. According to an embodiment, the first array 371 and the second array 372 may be spaced apart from each other in a second direction (e.g., the Y-axis direction) intersecting the first direction (e.g., the X-axis direction).

In an embodiment, as the number of scan lines 311 overlapping the first array 371 and the second array 372 increases, an influence of optical noise of the display 302 on the sensor assembly 370 may increase. When an integration time (e.g., t_{IT} of FIG. 9) of the sensor assembly 370 is reduced in order to avoid the optical noise of the display 302, illuminance sensitivity of the sensor assembly 370 may decrease, resulting in reduced resolution of the sensor assembly 370 in a low-illuminance environment. According to an embodiment of the disclosure, when light-receiving elements (e.g., the optical elements 371a, 372a, and 373a) of the sensor assembly 370 are continuously arranged in a first direction (e.g., the X-axis direction), which is an extending direction of the scan lines 311 of the display panel 310 (e.g., the scan lines 311 of FIG. 7A), the number of the scan lines 311 overlapping the light-receiving elements may be reduced when viewed from above the display 302 (e.g., when the display 302 is viewed in the -Z direction), compared to when the light-receiving elements are continuously arranged in a second direction (e.g., the Y-axis direction) intersecting the first direction. When the number of the scan lines 311 of the display panel 310 that overlap the light-receiving elements of the sensor assembly 370 is reduced, an influence of optical noise of the display panel 310 applied to the sensor assembly 370 may be reduced.

According to an embodiment, when viewed from above the display 302 (e.g., when the display 302 is viewed in the -Z direction), the first array 371 and the second array 372 of the sensor assembly 370 may not overlap the scan lines 311 of the display panel 310, or may overlap the scan lines 311 by a predetermined number or fewer. According to an embodiment, the predetermined number of the scan lines 311 overlapping the first array 371 and the second array 372 may be two or fewer. For example, referring to FIG. 11, when viewed from above the display 302 (e.g., when the display 302 is viewed in the -Z direction), the first array 371 may overlap an N-th scan line 311, and/or the second array 371 may overlap an (N+5)-th scan line 311.

According to an embodiment, the first array 371 and the second array 372 of the sensor assembly 370 may form an illuminance sensor (e.g., the illuminance sensor module 41 of FIG. 10) for measuring illuminance of a surrounding environment of an electronic device (e.g., the electronic device 101 of FIGS. 1 to 5).

According to an embodiment, the first array 371 may include a plurality of first optical elements 371a that are spaced apart from each other in a first direction (e.g., a horizontal direction or the X-axis direction). The first optical elements 371a may include at least one light-receiving element (e.g., a photodiode) including channels (e.g., CH0 and CH1 of FIG. 8A) responsive to light of different wavelength bands. According to an embodiment, the second array 372 may include a plurality of second optical elements 372a that are spaced apart from each other in the first direction (e.g., the horizontal direction or the X-axis direction). The second optical elements 372a may include at least one light-receiving element (e.g., a photodiode) including channels (e.g., CH0 and CH1 of FIG. 8A) responsive to light of different wavelength bands. Referring to FIG. 13, for example, at least some of the first optical elements 371a disposed in the first array 371 may correspond to CH0 or CH1 of FIG. 8A, and at least some of the second optical elements 372a disposed in the second array 372 may correspond to CH0 or CH1 of FIG. 8A.

According to an embodiment, an electronic device (e.g., the electronic device 101 of FIGS. 1 to 5) may measure illumination of a surrounding environment of the electronic device 101 by using an illuminance value measured by the first array 371 and an illuminance value measured by the second array 372. As described below with reference to FIGS. 12 to 14B, the first array 371 and the second array 372 may be driven independently or compositely (or synchronously) depending on illumination of the surrounding environment of the electronic device 101.

According to an embodiment, a first-direction length (e.g., a horizontal length or an X-axis direction length) of the first array 371 and the second array 372 of the sensor assembly 370 may be a first specified length (e.g., X₁ of FIG. 11). For example, the first specified length X₁ of the first array 371 and the second array 372 may be determined in consideration of sensitivity and/or a field of view (FOV) of the sensor assembly 370. For example, the first specified length X₁ may be determined in consideration of the size of the first through hole 331 (e.g., the first through hole 331 of FIGS. 6B and 13) of the display 302. According to an embodiment, the first specified length X₁ of the first array 371 and the second array 372 may be determined to be greater than the diameter of the first through hole 331 (e.g., D1 of FIG. 11) in order to secure the field of view (FOV) of the sensor assembly 370.

According to an embodiment, a second-direction length (e.g., a vertical length or a Y-axis direction length) of the first array 371 and the second array 372 may be a second specified length (e.g., Yi of FIG. 11). According to an embodiment, the second specified length Y₁ may be determined to minimize the number of scan lines 311 of the display panel 310 that overlap the first array 371 and the second array 372. For example, the second specified length Y1 may range from about 100 µm to about 130 µm, and in one example, may be about 120 µm. For example, the first array 371 and the second array 372 may be spaced apart from each other by a first predetermined interval (e.g., d1 of FIG. 11). For example, the first specified interval d1 may be determined in consideration of the number of scan lines 311 of the display panel 310 overlapping the first array 371 and the second array 372 and/or the field of view (FOV).

According to an embodiment, the first-direction length (e.g., the horizontal length or the X-axis direction length) of the first array 371 may be greater than the second-direction length (e.g., the vertical length or the Y-axis direction length) of the first array 371. According to an embodiment, the first-direction length (e.g., the horizontal length or the X-axis direction length) of the second array 372 may be greater than the second-direction length (e.g., the vertical length or the Y-axis direction length) of the second array 372. According to an embodiment, the first-direction length (e.g., the horizontal length or the X-axis direction length) of the first optical elements 371a constituting the first array 371 may be greater than the second-direction length (e.g., the vertical length or the Y-axis direction length) of the first optical elements 371a. According to an embodiment, the first-direction length (e.g., the horizontal length or the X-axis direction length) of at least one of the second optical elements 372a constituting the second array 372 may be greater than the second-direction length (e.g., the vertical length or the Y-axis direction length) of the second optical elements 372a. However, the numbers, arrangements, and shapes of the first optical elements 371a and the second optical elements 372a are not limited. For example, as long as the first-direction lengths (e.g., the horizontal lengths or the X-axis direction lengths) of the first array 371 and the second array 372 are greater than the second-direction lengths (e.g., the vertical lengths or the Y-axis direction lengths), the numbers, arrangements, and shapes of the first optical elements 371a and the second optical elements 372a may be modified.

Referring to FIG. 11, in an embodiment, the sensor assembly 370 may further include a third array 373 disposed between the first array 371 and the second array 372. According to an embodiment, the third array 373 may be spaced apart from the first array 371 and the second array 372. According to an embodiment, the third array 373 may be disposed in a central portion of the first through hole 331 of the display 302. For example, the third array 373 and the first through hole 331 may be aligned with each other in an axis direction, for example, a third direction (e.g., the Z-axis direction) that intersects the first direction (e.g., the X-axis direction) and the second direction (e.g., the Y-axis direction). According to an embodiment, the first-direction length (e.g., the horizontal length or the X-axis direction length) of the third array 373 may be greater than the second-direction length (e.g., the vertical length or the Y-axis direction length) of the third array 373. For example, the first-direction length (e.g., the horizontal length or the X-axis direction length) of the third array 373 may be the first specified length (e.g., X₁ of FIG. 11). For example, the second-direction length (e.g., the vertical length or the Y-axis direction length) of the third array 373 may be the second specified length (e.g., Yi of FIG. 11).

According to an embodiment, the third array 373 may include a plurality of third optical elements 373a that are spaced apart from each other in the first direction (e.g., the horizontal direction or the X-axis direction). According to an embodiment, the third optical elements 373a may include light-receiving elements (e.g., photodiodes) configured to function as an illuminance sensor or a near-illuminance sensor. For example, when the third array 373 functions as a proximity sensor, it may include light-receiving elements (e.g., the light-receiving elements of the first channel CH0 and the second channel CH1 of FIGS. 8A and 8B) that are responsive to light having wavelengths of different bands. According to an embodiment, the third array 373 may include light-receiving elements (e.g., photodiodes) configured to function as a proximity sensor or a near-illumination sensor and may be responsive to light having an infrared wavelength (e.g., about 940 nm).

According to an embodiment, the first-direction length (e.g., the horizontal length or the X-axis direction length) of the third optical elements 373a of the third array 373 may be greater than the second-direction length (e.g., the vertical length or the Y-axis direction length) of the third optical elements 373a. However, the number, arrangement, and shape of the third optical elements 373a are not limited. For example, as long as the first-direction length (e.g., the horizontal length or the X-axis direction length) of the third array 373 is greater than a second-direction length (e.g., the vertical length or the Y-axis direction length), the number, arrangement, and shape of the third optical elements 373a may be modified.

FIG. 12 is a view illustrating an operation of a sensor assembly (e.g., the sensor assembly 370 of FIGS. 6A to 6C and FIG. 11) in an independent mode. In the disclosure, the "independent mode" of the sensor assembly 370 may refer to a mode in which the first array 371 and the second array 372 are driven independently of each other in a high-illuminance environment. According to an embodiment, the sensor assembly 370 may operate in the independent mode in a high-illumination or high-luminance environment (e.g., outdoors in strong sunlight), and in the independent mode, a greater one of the illuminance value of the first array 371 and the illuminance value of the second array 372 may be calculated as an illuminance value.

According to an embodiment, the first array 371 and the second array 372 of the sensor assembly 370 may constitute an illuminance sensor (e.g., the illuminance sensor module 41 of FIG. 10). According to an embodiment, in the independent mode, the first array 371 (e.g., the first array 371 of FIG. 11) and the second array 372 (e.g., the second array 372 of FIG. 11) of the sensor assembly 370 may be driven independently of each other.

Referring to FIGS. 12 and 13, according to an embodiment, the electronic device 101 may measure illumination of a surrounding environment by using a first illuminance value (e.g., Lux0 of FIG. 12) measured by the first array 371 or a second illuminance value (e.g., Lux1 of FIG. 12) measured by the second array 372 of the sensor assembly 370. According to an embodiment, an application processor (e.g., the application processor 10 of FIG. 10) or a sensor hub processor (e.g., the sensor hub 20 of FIG. 10) may determine or adjust luminance or brightness of the display 302 based on the greater one of the first illuminance value Lux0 and the second illuminance value Lux1. Referring to FIG. 13, for example, in the independent mode, the greater one of the first illuminance value Lux0 measured by the first light-receiving element 371a (e.g., CH0 of FIG. 8A) of the first array 371 of the sensor assembly 370 and the second illuminance value Lux1 measured by the second optical element 372a (e.g., CH1 of FIG. 8A) of the second array 372 may be used for illuminance measurement, and accordingly, the field of view (FOV) of the sensor assembly 370 may be secured. According to an embodiment, since an illuminance value is calculated by using the first array 371 or the second array 372 in the independent mode of the sensor assembly 370, the independent mode may be more suitable for a high-illumination or high-luminance environment (e.g., outdoors in strong sunlight) than a composite mode in which an illuminance value is calculated by using both the first array 371 and the second array 372, in that the area of the illuminance sensor may be relatively small compared to the composite mode. According to an experimental example, in the independent mode (see, e.g., FIG. 12), optical noise of the scan lines 311 of the display 302 applied to each of the first array 371 and the second array 372 may be reduced by about 74% or more compared to an existing structure.

FIGS. 14A and 14B are views illustrating an operation of a sensor assembly (e.g., the sensor assembly 370 of FIGS. 6A to 6C and FIG. 11) in a composite mode. Referring to FIGS. 14A and 14B, according to an embodiment, an electronic device 101 may calculate an illuminance value of a surrounding environment by using the first array 371 (e.g., the first array 371 of FIG. 11) and the second array 372 (e.g., the second array 372 of FIG. 11) of the sensor assembly 370, and the calculated value may be referred to as a third illuminance value (e.g., Lux2 of FIGS. 14A and 14B).

In the disclosure, the "composite mode" of the sensor assembly 370 may refer to a mode in which the first array 371 and the second array 372 are driven in association with each other in a low-illuminance environment. According to an embodiment, the sensor assembly 370 may operate in the composite mode in a low-illumination or low-luminance environment (e.g., indoors in a dark environment), and in the composite mode, an illuminance value may be calculated or derived from the first array 371 and the second array 372.

According to an embodiment, in the composite mode, the first array 371 and the second array 372 of the sensor assembly 370 may be driven with a time difference t_{AD}. For example, the first array 371 and the second array 372 may receive optical noise caused by different scan lines 311 of the display 302. In an embodiment, when the first array 371 and the second array 372 are driven with a time difference t_{AD}, driving timings of the first array 371 and the second array 372 may be adjusted such that the first array 371 and the second array 372 are not driven simultaneously with different scan lines 311 of the display 302 that respectively affect the first array 371 and the second array 372. Accordingly, when the first array 371 and the second array 372 are driven with the time difference t_{AD}, an influence of optical noise caused by the scan lines 311 of the display 302 that affect the first array 371 and the second array 372 may be reduced compared to when the first array 371 and the second array 372 are driven simultaneously. According to an experimental example, in the composite mode (see, e.g., FIG. 14A), optical noise of the scan lines 311 of the display 302 applied to the first array 371 and the second array 372 may be reduced by about 28% or more compared to an existing structure.

According to an embodiment, since an illuminance value is calculated by using both the first array 371 and the second array 372 in the composite mode of the sensor assembly 370, the composite mode may be more suitable for a low-illumination or low-luminance environment (e.g., indoors in a dark environment) than the above-described independent mode, in that the area of the illuminance sensor may be relatively greater than in the independent mode. Referring to FIG. 14B, in a low-illumination environment, the display 302 becomes darker, and thus an inactive (or off) section of the display 302 may increase. In this case, in the composite mode, sensitivity of the illuminance sensor may be improved or secured by increasing the integration time t_{IT} of the light-receiving elements of the first array 371 and the second array 372. Referring to FIG. 14B, according to an embodiment, in the composite mode, the integration time (t_{IT} of FIG. 12) of the light-receiving elements of the first array 371 and the second array 372 may be increased to twice (2 x t_{IT} of FIG. 14B) the integration time (t_{ITT} of FIG. 12) of the independent mode.

FIG. 15 may illustrate a state in which an electronic device 101 (e.g., the electronic device 101 of FIGS. 1 to 5) according to an embodiment of the disclosure is tilted upward or downward by about -45 degrees or about +45 degrees, or tilted leftward or rightward by about -45 degrees or about +45 degrees. Here, tilting the electronic device 101 upward or downward may refer to rotating the electronic device 101 about the X-axis of FIGS. 2 to 5, and tilting the electronic device 101 leftward or rightward may refer to rotating the electronic device 101 about the Y-axis of FIGS. 2 to 5. Table 1 below may illustrate changes in the amounts of light received by the first array 371 and the second array 372 of the sensor assembly 370, compared to a comparative example in which the electronic device 101 of FIG. 15 is not tilted (0 degrees), when the electronic device 101 is tilted upward, downward, leftward, or rightward by about -45 degrees or about +45 degrees.

**[Table 1]**

| | Arrangement types of light-receiving elements | Direct light | Upward/downward tilting | | Leftward/rightward tilting | |
|---|---|---|---|---|---|---|
| | | 0 Deg. | +45 Deg. tilting | -45 Deg. tilting | +45 Deg. tilting | -45 Deg. tilting |
| Existing | Single | 100% | 34% | 36% | 38% | 36% |
| Independent mode | First array | 100% | 95% | 0% | 38% | 41% |
| | Second array | 100% | 0% | 84% | 40% | 38% |
| Composite mode (1 x IT) | First array + Second array | 100% | 46% | 43% | 39% | 40% |

Referring to Table 1, when the electronic device 101 is not tilted (direct light of Table 1), light received by the light-receiving element of the "existing" configuration or light received by the light-receiving elements (e.g., the light-receiving elements 371a, 372a, and 373a of FIG. 10) of the independent first array 371 and/or the second array 372 according to an embodiment of the disclosure may be 100%. In Table 1, the "existing" sensor assembly may include a single light-receiving element (e.g., a photodiode), and when the electronic device is tilted upward, downward, leftward, or rightward by about -45 degrees or about +45 degrees, an amount of light received by the light-receiving element may decrease to about 34% to about 38% compared to when the electronic device is not tilted (e.g., direct light). According to an embodiment of the disclosure, in the independent mode, when the electronic device 101 is tilted upward, downward, leftward, or rightward by about -45 degrees or about +45 degrees, an amount of light received by the light-receiving elements (e.g., the light-receiving elements 371a, 372a, and 373a of FIG. 10) of the first array 371 and/or the second array 372 may be up to about 95%, and field-of-view performance may be improved more than twice compared to the "existing" sensor assembly. According to an embodiment of the disclosure, in the composite mode, when the electronic device 101 is tilted upward, downward, leftward, or rightward by about -45 degrees or about +45 degrees, an amount of light received by the light-receiving elements 371a, 372a, and 373a of the first array 371 and/or the second array 372 may increase compared to the "existing" sensor assembly, and field-of-view performance may be improved. FIG. 16 is a flowchart illustrating a method of driving the sensor assembly 370 in the independent mode of FIG. 12 or the composite mode of FIGS. 14A and 14B by using the application processor 10, the sensor hub processor 20, the DDI 30, and the sensor module 40 according to the embodiment of FIG. 10.

Referring to FIG. 16, when an illuminance sensor (e.g., the first array 371, the second array 372, and/or the third array 373 of FIG. 10 and the illuminance sensor module 41 of FIG. 11) is operated (51), the illuminance sensor may enter a short mode (52). A sensor hub processor (e.g., the sensor hub processor 20 of FIG. 11) may detect luminance of the display (53) and compare a current luminance with a pre-stored threshold luminance THD_{BR} (54). When the current luminance is greater than the threshold luminance THD_{BR}, the sensor hub processor 20 may determine or command that the illuminance sensor enters an independent mode (55), considering that an inactive (or off) section of the display 302 is insufficient. When the current luminance is lower than the threshold luminance THD_{BR}, the sensor hub processor 20 may determine or command that the illuminance sensor enters a composite mode (57), considering that an inactive (or off) section of the display 302 is sufficient. After entering the independent mode or the composite mode, the sensor hub processor 20 may configure settings by commanding pre-stored setting values t_{IT}, t_{P}, and t_{AD} to the illuminance sensor (e.g., the first array 371, the second array 372, and/or the third array 373 of FIG. 10 and the illuminance sensor module 41 of FIG. 11) (56 or 58), and the illuminance sensor may detect illumination and output a measurement value as a digital signal (or ADC) (59). The sensor hub processor 20 may determine whether the current mode is a composite mode (60), and when the current mode is not the composite mode (61), the sensor hub processor 20 may calculate a first illuminance value Lux0 and a second illuminance value Lux1 of the first array 371 (61) and compare the first illuminance value Lux0 and the second illuminance value Lux1 with each other (62). Then, when the first illuminance value Lux0 is greater than the second illuminance value Lux1, the sensor hub processor may determine the first illuminance value Lux0 as a final illuminance value (63), and when the first illuminance value Lux0 is not greater than the second illuminance value Lux1, the sensor hub processor may determine the second illuminance value Lux1 as the final illuminance value (64). The sensor hub processor 20 may determine whether the current mode is a composite mode (60), and when the current mode is the composite mode (61), the sensor hub processor 20 may calculate a third illuminance value Lux2 measured by using the first array 371 and the second array 372 (62). The application processor 10 or the DDI 30 may adjust luminance or brightness of the display 302 based on the final illuminance value (e.g., the first illuminance value Lux0, the second illuminance value Lux1, or the third illuminance value Lux2).

Problems to be solved by the disclosure may be variously determined within a scope that does not depart from the spirit and scope of the disclosure. The effects that may be obtained from the disclosure are not limited to the effects mentioned above, and various effects that are directly or indirectly identified through this document may be provided. The sensor assembly of the disclosure and the electronic device including the sensor assembly as described above are not limited by the foregoing embodiments and drawings, and various substitutions, modifications, and changes may be made within the technical scope of the disclosure, which will be apparent to those ordinarily skilled in the art to which the disclosure pertains.

Although the disclosure has been described with reference to an embodiment as an example, it is to be understood that the embodiment is intended to be exemplary and is not limiting the disclosure. It will be apparent to those skilled in the art that various changes in form and detail may be made without departing from the overall scope of the disclosure, including the appended claims and their equivalents.

According to an embodiment of the disclosure, an electronic device 101 may be provided. The electronic device may include a display 302 including a display panel 310, a sensor assembly 370 disposed to face a rear surface of the display panel, and at least one processor 120, 10, or 20 electrically connected to the display and the sensor assembly. The display panel may include a plurality of scan lines 311a including a plurality of pixels continuously arranged in a first direction. The scan lines may be spaced apart from each other in a second direction intersecting the first direction. The sensor assembly may include a first array 371 including a plurality of first optical elements 371a continuously arranged in the first direction, and a second array 372 spaced apart from the first array in the second direction. The second array may include a plurality of second optical elements 372a continuously arranged in the first direction. When the display is viewed from above, the first array and the second array may not overlap with the scan lines or may overlap with a specified number or fewer of the scan lines.

According to an embodiment, the display may further include a support structure 330 disposed on the rear surface of the display panel to be spaced apart from the sensor assembly, and the support structure may include a first through hole 331 at least partially facing the sensor assembly.

According to an embodiment, lengths of the first array and the second array in the first direction may each be a first specified length, and the first specified length may be greater than a diameter of the first through hole.

According to an embodiment, the specified number may be two or fewer.

According to an embodiment, the sensor assembly may be configured to measure illumination of an external environment of the electronic device using at least a portion of the first array or the second array.

According to an embodiment, the sensor assembly may be configured to be switchable into an independent mode in which the first array and the second array are driven independently or a composite mode in which the first array and the second array are driven in conjunction with each other.

According to an embodiment, the at least one processor may be configured, in the independent mode, to change brightness of the display based on the greater of a first illuminance value measured by the first array or a second illuminance value measured by the second array.

According to an embodiment, the at least one processor may be configured, in the composite mode, to change the brightness of the display based on a third illuminance value calculated using a first illuminance value measured by the first array or a second illuminance value measured by the second array.

According to an embodiment, in the composite mode, the first array and the second array may be driven with a time difference.

According to an embodiment, an integration time of the first array and the second array in the composite mode may be at least twice an integration time of the first array and the second array in the independent mode.

According to an embodiment, the sensor assembly may further include a third array disposed between the first array and the second array, the third array including a plurality of third optical elements continuously arranged in the first direction.

According to an embodiment, the sensor assembly may be configured to perform at least one of measuring illumination of an external environment of the electronic device or detecting a position of an external object of the electronic device using the third array.

According to an embodiment, the third array may be aligned with the first through-hole in a third direction intersecting the first direction and the second direction.

According to an embodiment, the first optical elements may include first light-receiving elements, and the second optical elements may include second light-receiving elements responsive to light having a wavelength band different from that to which the first light-receiving elements are responsive.

According to an embodiment of the disclosure, a sensor assembly 370 may be provided. The sensor assembly may include a first array 371 including a plurality of first optical elements 371a continuously arranged in the first direction, and a second array 372 spaced apart from the first array in the second direction, the second array including a plurality of second optical elements 372a continuously arranged in the first direction. At least some of the first optical elements or the second optical elements may be configured to detect light incident on the sensor assembly.

According to an embodiment, at least some of the first optical elements or the second optical elements may be used to measure illumination of an external environment of the sensor assembly.

According to an embodiment, at least some of the first optical elements or the second optical elements may be used to detect a position of an external object of the sensor assembly.

According to an embodiment, the sensor assembly may be configured to be switchable into an independent mode in which the first array and the second array are driven independently or a composite mode in which the first array and the second array are driven in conjunction with each other.

According to an embodiment, the first optical elements may include first light-receiving elements, and the second optical elements may include second light-receiving elements responsive to light having a wavelength band different from that to which the first light-receiving elements are responsive.

According to an embodiment, the sensor assembly may further include a third array disposed between the first array and the second array, and the third array may include a plurality of third optical elements continuously arranged in the first direction.

According to an embodiment, the third optical elements may include light-receiving elements configured to detect illumination of an external environment of the sensor assembly or detect a position of an external object of the sensor assembly.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that na embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to an embodiment, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a display (302) including a display panel (310);
a sensor assembly (370) disposed to face a rear surface of the display panel; and
at least one processor (120; 10; 20) electrically connected to the display and the sensor assembly,
wherein the display panel includes a plurality of scan lines (311a), and the scan lines include a plurality of pixels continuously arranged in a first direction and are spaced apart from each other in a second direction intersecting the first direction,
wherein the sensor assembly includes:
a first array (371) including a plurality of first optical elements (371a) sequentially arranged in the first direction, and
a second array (372) spaced apart from the first array in the second direction and including a plurality of second optical elements (372a) sequentially arranged in the first direction, and
wherein when the display is viewed from above, the first array and the second array do not overlap with the scan lines or overlap with a specified number or fewer of the scan lines.

2. The electronic device according to claim 1, wherein the display further includes a support structure (330) disposed on the rear surface of the display panel to be spaced apart from the sensor assembly, and the support structure includes a first through hole (331) at least partially facing the sensor assembly.

3. The electronic device according to claim 2, wherein lengths of the first array and the second array in the first direction are a first specified length, and the first specified length is greater than a diameter of the first through hole.

4. The electronic device according to any one of claims 1 to 3, wherein the specified number is two or fewer.

5. The electronic device according to any one of claims 1 to 4, wherein the sensor assembly is configured to measure illumination of an external environment of the electronic device using at least a portion of the first optical elements or the second optical elements.

6. The electronic device according to any one of claims 1 to 5, wherein the sensor assembly is configured to be switchable into an independent mode in which the first array and the second array are driven independently or a composite mode in which the first array and the second array are driven in conjunction with each other.

7. The electronic device according to claim 6, wherein the at least one processor is configured, in the independent mode, to change brightness of the display based on the greater of a first illuminance value measured by the first array or a second illuminance value measured by the second array.

8. The electronic device according to claim 6 or 7, wherein the at least one processor is configured, in the composite mode, to change the brightness of the display based on a third illuminance value calculated using a first illuminance value measured by the first array or a second illuminance value measured by the second array.

9. The electronic device according to any one of claims 6 to 8, wherein, in the composite mode, the first array and the second array are driven with a time difference.

10. The electronic device according to any one of claims 6 to 9, wherein an integration time (t_{IT}) of the first array and the second array in the composite mode is at least twice of an integration time of the first array and the second array in the independent mode.

11. The electronic device according to any one of claims 1 to 10, wherein the sensor assembly further includes a third array disposed between the first array and the second array, and the third array includes a plurality of third optical elements continuously arranged in the first direction.

12. The electronic device according to claim 11, wherein the sensor assembly is configured to perform at least one of measuring illumination of an external environment of the electronic device or detecting a position of an object external to the electronic device using at least a portion of the third optical elements.

13. The electronic device according to claim 11 or 12, wherein the third array is aligned with the first through hole in a third direction intersecting the first direction and the second direction.

14. The electronic device according to any one of claims 1 to 13, wherein the first optical elements include first light-receiving elements, and the second optical elements include second light-receiving elements which are sensitive to light having a different wavelength band from a wavelength of light to which the first light-receiving elements are sensitive.

15. A sensor assembly (370) comprising:
a first array (371) including a plurality of first optical elements (371a) sequentially arranged in the first direction; and
a second array (372) spaced apart from the first array in the second direction and including a plurality of second optical elements (372a) sequentially arranged in the first direction,
wherein at least some of the first optical elements or the second optical elements are configured to detect light incident on the sensor assembly.
